# EUROPEAN PATENT APPLICATION

(11) **EP 4 300 708 A1**
(43) Date of publication of application: **03.01.2024**
(21) Application number: 23177741.8
(22) Date of filing: 06.06.2023
(51) Int. Cl.: H01Q 1/22, H01Q 1/38, H01Q 5/385, H01Q 19/24, H01Q 19/30

(54) **RADIO FREQUENCY IDENTIFICATION TAG WITH ANTENNA AND PASSIVE REFLECTOR**

(30) Priority: 29.06.2022 US 202217853679
(71) Applicant: NXP B.V., 5656 AG Eindhoven (NL)
(72) Inventor: Nazarov, Alexey, 5656AG Eindhoven (NL)
(74) Representative: Krott, Michel

(57) **Abstract**

An RFID tag is described with an antenna and a passive reflector. In an example, the RFID tag has a dielectric substrate. A first conductive pattern is on the dielectric substrate to form an antenna. An RFID integrated circuit (IC) chip is on the dielectric substrate having an antenna port electrically coupled to the antenna, the antenna port being configured to provide RF energy from a reader to the RFID IC chip through the antenna, the RFID IC chip being configured to provide a response to the reader through the antenna. A second conductive pattern is on the dielectric substrate beside the antenna in the form of a second dipole to form a passive reflector that is not electrically coupled to the antenna port, the passive reflectors being configured to reflect RF energy from the reader away from the antenna.

## Description

### BACKGROUND

Radio Frequency Identification (RFID) tags can be attached to an object to identify, track, and inventory the attached object. An external RFID Interrogator, also known as a reader, or an RFID Interrogation Zone reads a number that is stored in the tag and in some circumstances can read other information such as a stored history of ambient conditions. In some circumstances, a reader can also write data to the tag which the same or another reader can then read back. This capability has found use, for example, in manufacturing and processing workflows. As the object moves through a process, information can be written to the tag at each stage of the process. A reader can then determine characteristics of the object and any additional operations to apply.

RFID tags typically include an integrated circuit (IC) chip coupled to an antenna and mounted on a substrate. The substrate is designed to be low cost and easily attached to an object. Polyethylene sheets are used for the substrate in many applications. Active RFID tags include a battery to power a receiver, a transmitter, and a memory of the tag. An active RFID tag is able to perform simple signal processing and computing operations. Passive RFID tags are powered by radio frequency (RF) energy that is applied by a tag reader and have no on-board battery. In some embodiments, the RF energy is harvested by an antenna of the tag and used to charge a capacitor to power the passive RFID tag. Near field communication (NFC) transponders may be regarded as a specific type of RFID transponder and in some implementations the NFC standards are incorporated into RFID standards. The principles described herein may also be applied to NFC transponders.

Passive RFID tags commonly operate when an external reader transmits RF energy to the RFID tag. This is called a forward link and the RF energy may include commands and data according to a suitable protocol. The passive RFID tag backscatters the RF energy applied by the reader to create what is called the reverse link back to the reader. The reader detects the backscattering using its own antenna and interprets the backscattering as transmitted data. Using energy harvested from the reader, the IC chip of an RFID tag is able to operate within protocols for reading and writing data, encrypting and decrypting stored values, and avoiding collisions with data communication from other passive RFID tags. These protocols allow a single reader to read many RFID tags one after the other within fractions of a second.

### SUMMARY

Antennas and passive reflectors are described for radio frequency identification tags and similar types of RF devices. In an embodiment, an RFID tag is described with an antenna and a passive reflector. In an example, the RFID tag has a dielectric substrate. A first conductive pattern is on the dielectric substrate to form an antenna. An RFID integrated circuit (IC) chip is on the dielectric substrate having an antenna port electrically coupled to the antenna, the antenna port being configured to provide RF energy from a reader to the RFID IC chip through the antenna, the RFID IC chip being configured to provide a response to the reader through the antenna. A second conductive pattern is on the dielectric substrate beside the antenna in the form of a second dipole to form a passive reflector that is not electrically coupled to the antenna port, the passive reflector being configured to reflect RF energy from the reader away from the antenna. This RFID tag represents a solution to the problem of how to allow the electromagnetic field strength of a reader's forward link signal to be increased in the area around an RFID tag at little to no additional costs beyond the cost of an antenna alone.

In some embodiments, the antenna has a first orientation and the passive reflector has a second orientation orthogonal to the first orientation. In some embodiments, the passive reflector has a plurality of inductive loops in the second conductive pattern and a capacitive pad in the second conductive pattern at each end of the inductive loops to provide a first resonant frequency, and the RFID tag further includes a second passive reflector on the dielectric substrate that is not coupled to the antenna port and that has a second different resonant frequency. In some embodiments, the first conductive pattern and the second conductive pattern are formed by etching an aluminum layer on the substrate.

In an embodiment, a radio frequency identification (RFID) tag includes a substrate, an antenna on the substrate, an RFID integrated circuit (IC) chip on the substrate having an antenna port electrically coupled to the antenna, the antenna port being configured to provide RF energy from a reader to the RFID IC chip through the antenna, the RFID IC chip being configured to provide a response to the reader through the antenna, and a passive reflector on the substrate that is not electrically coupled to the antenna port, the passive reflector being configured to reflect RF energy from the reader away from the antenna. This RFID tag represents an alternative solution to the problem of how to allow the electromagnetic field strength of a reader's forward link signal to be increased in the area around an RFID tag at little to no additional costs beyond the cost of an antenna alone.

In some embodiments, the antenna has a first orientation and the passive reflector has a second orientation orthogonal to the first orientation. In some embodiments, the passive reflector has a first resonant frequency. The RFID tag further includes a second passive reflector on the substrate that is not coupled to the antenna port and that has a second different resonant frequency.

In some embodiments, the passive reflector is a dipole antenna. In some embodiments, the dipole antenna includes a first pole, a second pole, a first capacitive pad electrically coupled to the first pole, and a second capacitive pad coupled to the second pole. In some embodiments, the first and the second capacitive pads are at outboard ends of the respective first and second poles. Some embodiments include inductive loops at each end of the dipole antenna.

In some embodiments, the passive reflector has a resonant frequency that corresponds with goods positioned nearby when the RFID tag is in use. In some embodiments, the antenna and the passive reflector are comprised of aluminum patterns on the substrate. In some embodiments, the aluminum patterns are formed by etching an aluminum layer on the substrate.

In some embodiments, the antenna comprises a loop antenna electrically coupled to a dipole antenna and wherein the loop antenna is coupled to the antenna port. In some embodiments, the antenna is impedance matched to the RFID IC chip. In some embodiments, the dipole antenna of the antenna comprises a first capacitor at a first end of the dipole antenna and a second capacitor at a second end of the dipole antenna.

In an embodiment, a radio frequency identification (RFID) tag includes a substrate, means on the substrate for harvesting and backscattering radio frequency (RF) energy from a reader, means electrically coupled to the means for harvesting for providing values through the means for backscattering, and means on the substrate for reflecting the RF energy away from the means for harvesting that is not electrically coupled to the means for providing values. This RFID tag represents an alternative solution to the problem of how to allow the electromagnetic field strength of a reader's forward link signal to be increased in the area around an RFID tag at little to no additional costs beyond the cost of an antenna alone.

In some embodiments, the means for reflecting has a first resonant frequency, the RFID tag includes a second means on the substrate that is not coupled to the means for harvesting for reflecting the RF energy away from the means for harvesting and the second means for reflecting has a second different resonant frequency. In some embodiments, the means for harvesting includes means for storing energy on the substrate.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 is a diagram of an RFID tag with an antenna and reflectors.
Fig. 2 is a diagram of radio links in a spatial volume with multiple RFID tags.
Fig. 3 is a diagram of an RFID tag on a substrate with an antenna and reflectors.
Fig. 4 is a diagram of an alternative RFID tag on a substrate with an antenna and reflectors.
Fig. 5 is a diagram of a further alternative RFID tag on a substrate with an antenna and reflectors.
Fig. 6 is a diagram of a further alternative RFID tag on a substrate with an antenna and reflectors.
Fig. 7 is a diagram of a further alternative RFID tag on a substrate with an antenna and reflectors.
Fig. 8 is a diagram of a further alternative RFID tag on a substrate with an antenna and reflectors.
Fig. 9 is a diagram of a further alternative RFID tag on a substrate with an antenna and reflectors.
Fig. 10 is a diagram of a further alternative RFID tag on a substrate with an antenna and reflectors.
Fig. 11 is a diagram of a further alternative RFID tag on a substrate with an antenna and reflectors.
Fig. 12 is a diagram of a further alternative RFID tag on a substrate with an antenna and reflectors.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

The utility of an RFID tag depends in part on the reading rate and the time for response. When an RFID tag is used to track the position or presence of an object, then it is important that the reader receives a reply from the RFID tag. In some applications, the reading rate is affected by the environment around the RFID tag. Other objects near the tag may reflect or absorb forward link RF energy from a readers making the RFID tag hard to read. Even with a large antenna and a very sensitive IC chip, an RFID tag may not be able to provide a desired 100% reading rate. In examples described herein, passive reflectors are configured to reflect the forward link RF energy away from an RFID tag antenna. Using an orthogonal orientation for the passive reflectors, the energy that is reflected away from the antenna is energy that would have only a small effect on the antenna. However, the reflected energy may be directed to other tags or reflective surfaces near the RFID tag. The new RFID tag structure with parasitic antenna elements in the form of passive reflector antennas allows the electromagnetic field strength of the reader's forward link signal to be increased in the area around an RFID tag at little to no additional costs beyond the cost of an antenna alone.

One setting for the use of RFID tags is referred to as track and trace for goods or parcels. In this setting, many goods or parcels are combined into a container, pallet, or larger parcel. Each individual item is tracked using an RFID tag that operates in a particular UHF (Ultra High Frequency) Band. In this setting, it is important to track the receipt, location and delivery of each item that bears an RFID tag. Otherwise, the item may be lost or delivered to the wrong destination. At a supply chain node, e.g., a distribution center or warehouse, goods of different kinds are gathered and placed on a carrier, e.g., a pallet, for delivery to a common destination. As a result, many disparate goods are collected and placed very close to each other. An RFID tag reader may then be used to determine and track each item on the carrier.

In a retail or general merchandise context, the carrier may contain items that do not significantly interact with the electromagnetic (EM) field of the RFID reader. RFID tags near these RF-friendly items are easily read. Other RF-unfriendly items may have severe interaction with the EM field, leading to absorption and or reflection of the field, e.g., packs of water bottles, packs of vacuumized rice, or beer cans, thus reducing the probability of capturing nearby or attached RFID tags. The RF environment is made worse when RF-unfriendly items are stacked, or clustered, which leads to effects like shielding of some tags from the field. Similar situations may occur in other contexts that also include RF-unfriendly items.

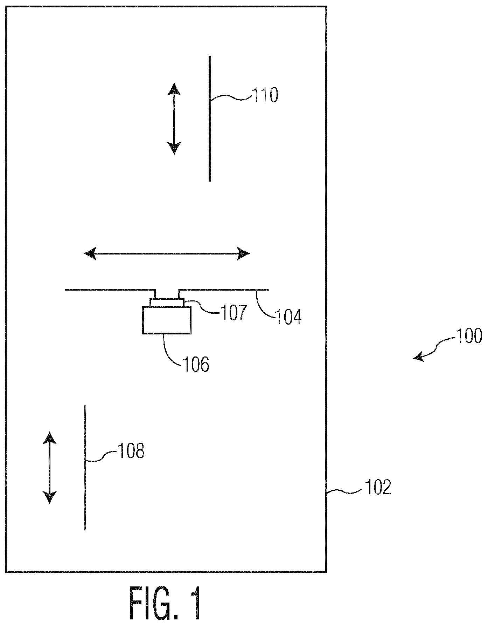

Fig. 1 is a simplified diagram of an example RFID tag 100. The RFID tag 100 is built on a substrate 102 that carries the structures and allows the RFID tag 100 to be attached to other items. In some embodiments, the substrate 102 may have an adhesive layer to allow the RFID tag 100 to be attached to goods or parcels. The RFID tag may also be attached to human readable or machine-readable labeling, such as a waybill, product labels, destinations, etc.

An antenna 104 is positioned on the substrate and an RFID IC chip 106 is attached to the antenna 104 and electrically coupled to it. The RFID IC chip 106 has an antenna port 107 coupled to the circuits of the RFID IC chip 106. The antenna is in the form of a dipole with a horizontal orientation as shown in the diagram. In some embodiments, the antenna 104 harvests power from the RF energy of a communication signal from a reader through electromagnetic coupling. The antenna 104 provides an RF interface to an external reader or interrogator (not shown), e.g., by modulating the communication signal from the reader. The reader can read values, e.g., identification numbers, from the RFID IC chip 106 and perform other operations as provided in suitable protocols. The dipole is horizontal in the diagram with a bias for horizontal EM fields but has a somewhat isotropic radiation pattern.

The RFID IC chip may support passive operation for a passive RFID tag or active operation for an active RFID tag or both. A passive RFID IC chip has at least one register to store a value. When the antenna receives sufficient forward link RF energy from the reader, then the passive RFID IC chip receives energy from the antenna. The stored value is then backscattered as a return link from the RFID IC chip by the antenna. An active RFID IC chip receives the forward link RF energy from the reader as a signal and then the RFID IC generates a response and transmits a return signal that includes the stored value to the reader on a forward link through the antenna. In some instances, a passive RFID IC chip performs some operations of an active RFID IC chip and vice versa. For both types of RFID tags, the antenna port is configured to provide RF energy from a reader to the RFID IC chip through the antenna. The RFID IC chip is configured to provide a response to the reader through the antenna.

The RFID tag 100 also includes a first passive reflector 108 and a second passive reflector 110. These operate as parasitic dipole antennas on the substrate that are not electrically coupled to the antenna 104 or to any other load, including the RFID IC chip. The first passive reflector 108 and the second passive reflector 110 are in the form of dipole antennas with a vertical orientation as shown in the diagram which is orthogonal to the antenna 104. The reflectors may have the same or different resonant frequencies and there may be more or fewer than two reflectors as shown. While the antenna 104 may be a broadband or wideband dipole antenna, with low direction sensitivity, the first passive reflector 108 and the second passive reflector 110 may be more omnidirectional and narrowband in comparison.

The first and second passive reflectors 108, 110 are configured to reflect the communication signal away from the antenna 104. With the orthogonal orientation of the first and second passive reflectors 108, 110, the energy that is reflected away from the antenna 104 is energy that would have only a small effect on the antenna 104. The reflection has little direct impact on the antenna and the first and second passive reflectors 108, 110 have very little coupling with the antenna 104. However, the reflected energy may be directed to other tags or surfaces near the RFID tag. This may allow other tags to receive the reflected energy at a respective antenna or it may allow the energy to be reflected from another surface back to the antenna 104.

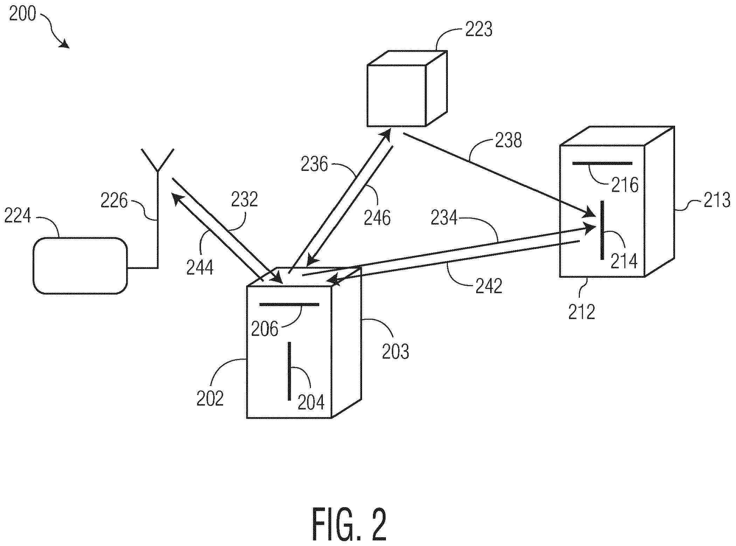

Fig. 2 is a diagram of a spatial volume 200 with RFID tags and a box of goods. The spatial volume 200 includes a first RFID tag 202 attached to a first box of goods 203. The RFID tag has an antenna 204 coupled to an RFID IC chip (not shown) and a passive reflector 206 that is not coupled to the RFID IC chip similar to the passive reflectors 108, 110 of Fig. 1. A second RFID tag 212 is attached to a second box of goods 213 and includes an antenna 214 coupled to an RFID IC chip (not shown). The second RFIID tag 212 also includes a passive reflector 216 that is also not coupled to an RFID IC of the second RFID tag 212. A third box of goods 223 is also within the spatial volume 200. The third box of goods 223 represents any goods that are positioned nearby when the first RFID tag and the reader are in use. A third RFID tag (not shown) may or may not be attached to the third box of goods 223. The third RFID tag may be oriented in direction that is not visible in the diagram or not exposed to RF reflections from other objects in the diagram. The goods within each box have one or more dielectric constants and may also have some reflectivity. There may be another RFID tag attached to the third box of goods 223 but this third RFID tag is not a part of this example operation.

In some embodiments, the first RFID tag 202 has more than one reflector. The reflector 206 may be tuned to the dielectric constant of the third box of goods 223 or to that of another object in the spatial volume. The reflector 216 of the second RFID tag may be tuned to the dielectric constant of the same or a different object in the spatial volume. In some embodiments, reflectors may be tuned to different impedances based on items that are anticipated in the spatial volume or to a range of different impedances to correspond to frequencies emitted by a reader.

The boxes of goods 203, 213, 223 represent any of a variety of different objects in the spatial volume. In a track and trace distribution center, goods may be boxed, shrink wrapped, or packaged in any of a variety of other ways. In other settings, goods may be in different packages, containers, holders, or carriers. The boxes of goods 203, 213, 223 represent any surrounding objects that may interact with the signals from a reader and the RFID tags in the spatial volume.

During an inventory, an RFID reader 224, or interrogator or Interrogation Zone, generates a primary electromagnetic (EM) field and transmits the EM field through an antenna 226 as a forward link 232. For purposes of explanation, the EM field generated by the reader and sent through the antenna induces currents in the antenna 204 of the first RFID tag. The EM field may also induce currents in many other antennas and reflectors through direct paths. In this example, the forward link induces currents in the nearby passive reflector 206 of the first RFID tag 202. The passive reflector currents cause a reflection 234 of the forward link 232 toward the second RFID tag 212 and a reflected forward link 236 toward the third box of goods 223. The reflected forward link 236 from the reflector 206 of the first RFID tag 202 is reflected from the third box of goods 223 as a secondary reflection 238 of the forward link to the second RFID tag 212. Only a few reflections and a secondary reflection are shown, however, there may be many more reflections without adding more objects to the spatial volume. The reflector 216 of the second RFID tag may also cause reflections and the first box of goods 203 and the second box of goods 213 may also cause reflections. With more objects in the spatial volume still more reflections may occur. The reflections and secondary reflections of the forward link 232 can be received by other passive reflectors of other tags (not shown) and in its turn be re-radiated through the spatial volume.

The forward link 232 from the reader 224 may be in the form of an EM field that propagates in the spatial volume in different directions and can be received by the antenna 204 of the first RFID tag 202 and the antenna 214 of the second RFID tag 212. As an example, the antenna 214 of the second RFID tag 212 may be energized by the reflection 234 from the first RFID tag 202 or by the secondary reflection 238 from the third box of goods 223. The antenna 204 of the first RFID tag 202 may be energized by the forward link 232 from the reader 224 or by a reflection 246 from the third box of goods 223 or from the reflector 216 of the second RFID tag 212. The first RFID tag 202 may be able to provide a reverse link 244 directly to the reader 224. The second RFID tag 212 may provide a reverse link 242 that is propagated to the reflector 206 of the first RFID tag 202 and reflected back to the reader 224. Each of the passive reflectors and the goods reflect signals without consuming power or modulating the signal in any way.

The reflections are analogous to a communications relay system in that the signal is reflected from each reflector to other tags or objects. The forward link is much more likely to reach all of the RFID tags in the spatial volume because of the reflections. Similarly, the return link is much more likely to reach the reader from all of the RFID tags in the spatial volume. As a result, the probability of capturing any one tag on a pallet is considerably increased.

The reflectors enable EM signals to be relayed through the volume of tagged products on a pallet, thus increasing the overall read rate. Adding to this, the possible multiple signal reflections from products within the spatial volume diversify the angles of arrival at each RFID tag, increasing the probability that an RFID tag, even with a non-isotropic radiation pattern, and a shielded RFID tag are able to receive enough energy to provide a response to the reader. As a further benefit, the passive reflectors may not increase the manufacturing cost of substrate and antenna inlay. In many implementations, the antenna is formed by etching an aluminum layer on a dielectric sheet. The passive reflector may be in the form of a conductive pattern that is etched from the same aluminum layer in the same process.

The added single or multiple parasitic passive reflectors on the substrate of the RFID tag boost the EM field strength in the spatial volume in which the tags are distributed. This can increase the readability of hard to read tags within the spatial volume, thereby increasing the read rate performance of the whole system. For a pallet or container of tagged goods the probability of reading all of the goods on the pallet is greatly increased. The passive reflectors are tuned to different resonance frequencies that may be selected to correspond to the dielectric properties of goods expected to be near the RFID tag. As an example, a reflector may have a resonant frequency that corresponds with goods positioned nearby when the RFID tag is in use. These goods may be in a container to which the RFID tag is attached or goods that are likely to be carried or stored on the same pallet or container.

The passive reflectors are located in the proximity of the RFID tag antenna and orthogonal to it. Accordingly, the passive reflectors do not couple directly to the main antenna and do not influence its characteristics. On the other hand, the passive reflectors may couple with the antenna via reflections from the surrounding environment, e.g., goods, especially with metals, as well as via reflections from the passive reflectors of the surrounding tags. With multiple RFID tags in a constrained spatial volume, the multiple passive reflectors build a kind of network of passive reflectors, which act as relays, where signals are distributed as they are propagated through the spatial volume from one passive reflector to another. For paths from the reader to various reflectors to a tag and back, the overall read rate characteristics are increased.

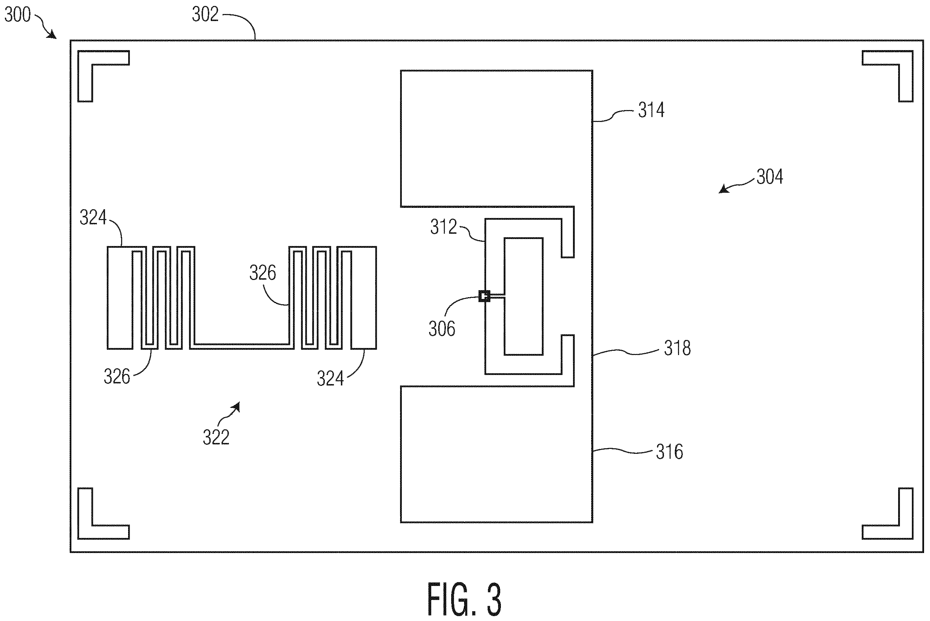

Fig. 3 is a diagram of an example RFID tag 300 suitable for UHF bands, among others. The RFID tag 300 is built on a substrate 302, which may be formed of any of a variety of different materials, e.g., polyethylene or other plastic dielectrics, biodegradable cellulose fibers, epoxy, laminates, etc. The substrate may be thin and provided with a paper backing. In some embodiments, the substrate 302 may be attached to an adhesive layer to allow the RFID tag 300 to be attached to goods or parcels. The RFID tag may also be attached to human readable or machine-readable labeling, such as a waybill, product labels, destinations, etc.

An antenna 304 is positioned on the substrate 302 and an RFID IC chip 306 is attached to the antenna 304 and electrically coupled to it. The RFID IC chip 306 has an antenna port coupled to the circuits of the RFID IC chip 306. The RFID IC chip 306 may include an analog RF interface, a digital control module and a memory such as an electrically erasable programmable read-only memory (EEPROM) or other memory. The digital control module may be formed of multiple parallel state machines or other logic.

The RFID IC chip 306 may include an energy harvester within or coupled to the analog RF interface, a capacitor, a battery, or other power source or combination of power sources. Passive RFID tags obtain power from the communication signal from the reader through electromagnetic coupling. The electromagnetic field generated by the communication signal induces a current in a radiator of the RFID tag, such as a dipole antenna. An antenna may receive an electromagnetic transmission from a transmitter. The current induced in the radiator element charges one or more capacitors within the RFID IC chip 306 or elsewhere on the RFID tag 300 that provides an operating voltage, and power, for the apparatus. Electromagnetic coupling works in the far-field of the communication signal. The structures described herein may be applied to a wide variety of IC chips. The antenna 304 provides an RF interface to an external reader or interrogator (not shown). Through the antenna 304, the reader can read values from the RFID IC chip 306 and perform other operations as provided in suitable protocols.

The antenna 304 has a central impedance matched loop antenna 312 that is electrically coupled to the RFID IC chip 306. The direct electrical coupling to the RFID IC chip 306 is implemented as a trace on the substrate 302 that is attached to conductors of the antenna port. The antenna 304 also includes a dipole antenna 318 that is electrically coupled to the loop antenna 312 with traces of aluminum on the substrate. The dipole antenna 318 has a first end that is coupled to a first capacitor 314 of the antenna 304 shown as the upper capacitor. The dipole antenna 318 has a second end that is coupled to a second capacitor 316 of the antenna 304, shown as the lower capacitor. The first capacitor and the second capacitor are in the form of a capacitive plate, load or pad. Instead of a plate, a passive component may be attached to the substrate as a capacitor.

The dimensions of the capacitors and the dipole determine the capacitance, inductance, and resistance to allow for the complex conjugate impedance of the antenna to be matched to the complex impedance of the RFID IC chip 306. The capacitors may also be used to store energy captured from the RF energy that is received from the reader. This energy helps to power the RFID IC chip 306 that is coupled to the antenna 304 through the antenna port. In this way the capacitors also serve as a means for storing energy on the substrate 302 for use by the RFID IC chip 306. The illustrated shape is provided as an example and a variety of other antenna configurations may be used instead or in addition to that shown. The structure of the antenna 304 provides a broadband dipole antenna, with low directional sensitivity. The dipole is vertical in the diagram with a bias for vertical E fields but has a somewhat isotropic radiation pattern.

The RFID tag 300 also includes a passive reflector 322. One or more parasitic dipole antennas may be on the substrate that are not electrically coupled to the antenna 304 or to any other load, including the RFID IC chip 306 to act as a passive reflector 322. The passive reflector 322 may be compact and positioned near the antenna 304. This keeps the overall RFID tag 300 size consistent with current form factors and dimensions.

The passive reflector 322 is in the form of a dipole antenna with two opposite poles and a capacitive pad 324 electrically coupled to each pole. The capacitive pads 324 are at outboard ends of the respective first and second poles of the dipole. In addition to the left and right capacitive pads 324, the dipole antenna has left and right inductive loops 326 or windings at each end of the dipole inboard of the capacitive pads. The relative dimensions of the capacitive pads 324 and inductive loops 326 determine the resonant frequency of the first passive reflector 322. More or fewer passive reflectors may be formed on the substrate to provide more or fewer resonant frequencies to suit a particular use of the RFID tag 300.

Since the additional elements of the passive reflector 322 require space on the substrate 302, the antenna 304 may be made smaller in size compared to an antenna for an RFID tag that has no additional elements. The dimensions, configuration, and orientation of the antenna 304 may be modified to provide suitable space on the substrate 302 for any desired additional elements.

The passive reflector 322 is oriented orthogonal to the antenna 304. The orthogonal orientation reduces the influence of the passive reflector 322 on the characteristics, e.g., impedance, radiation pattern, etc. of the antenna 304. The passive reflector may also be configured with a different resonant frequency. The resonance may be selected based on particular likely dielectrics or groups of dielectrics that may be near the RFID tag in use.

The antenna 304 and passive reflector 322 may be positioned on the substrate 302 by etching, deposition, or any other suitable technique. The antenna 304 and passive reflector 322 are configured as a conductive material held in place by the substrate that is formed of a non-conductive or dielectric material. The conductive material may be a metal, e.g., copper or aluminum, or a carbon compound, e.g., graphite or doped carbon, and may be produced in any desired way. In some embodiments, a layer of aluminum is applied to the substrate, by spin-coating, deposition, or other techniques. The aluminum is etched through a screen or mask to produce the illustrated shapes. In other embodiments aluminum is screen printed or deposited in the illustrated pattern as a conductive pattern on a dielectric sheet. The result of any of these processes is an antenna formed of the aluminum pattern and a passive reflector formed of the aluminum pattern on the substrate. As mentioned, any other conductive material may be used instead of aluminum.

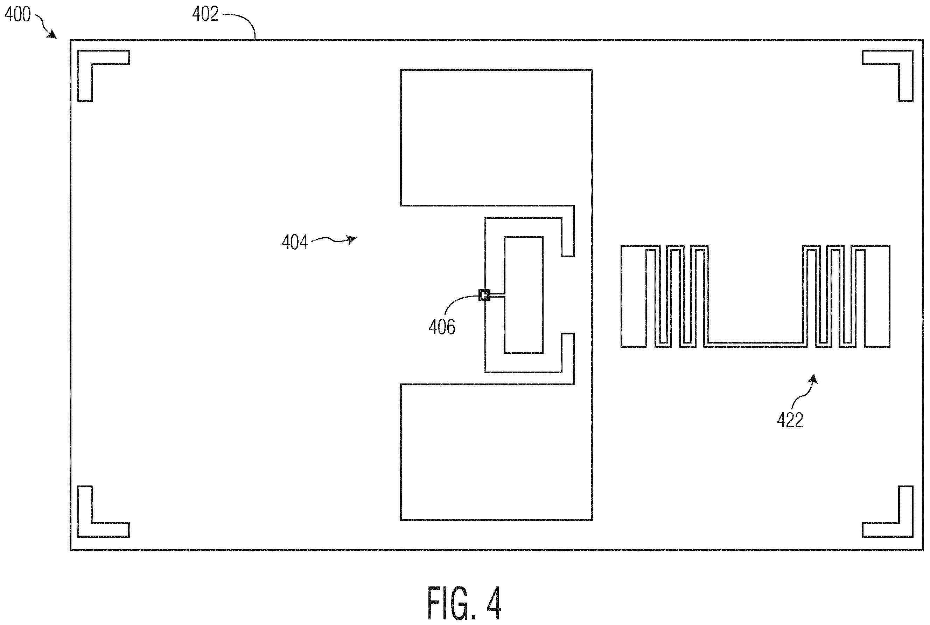

Fig. 4 is a diagram of an alternative example RFID tag 400. The RFID tag 400 has a substrate 402. An antenna 404 in the form of a dipole is attached to the substrate 402 in a central position. An RFID IC chip 406 is attached to and electrically coupled to the antenna 404. A passive reflector 422 in the form of a second dipole is attached to the substrate 402 and oriented orthogonal to the antenna 404. While in the example of Fig. 3, the passive reflector 322 is positioned to the left of the antenna 304, in the example of Fig. 4, the passive reflector 422 is positioned to the right of the antenna 404. The components may otherwise be the same or may be implemented as any of the variations mentioned above.

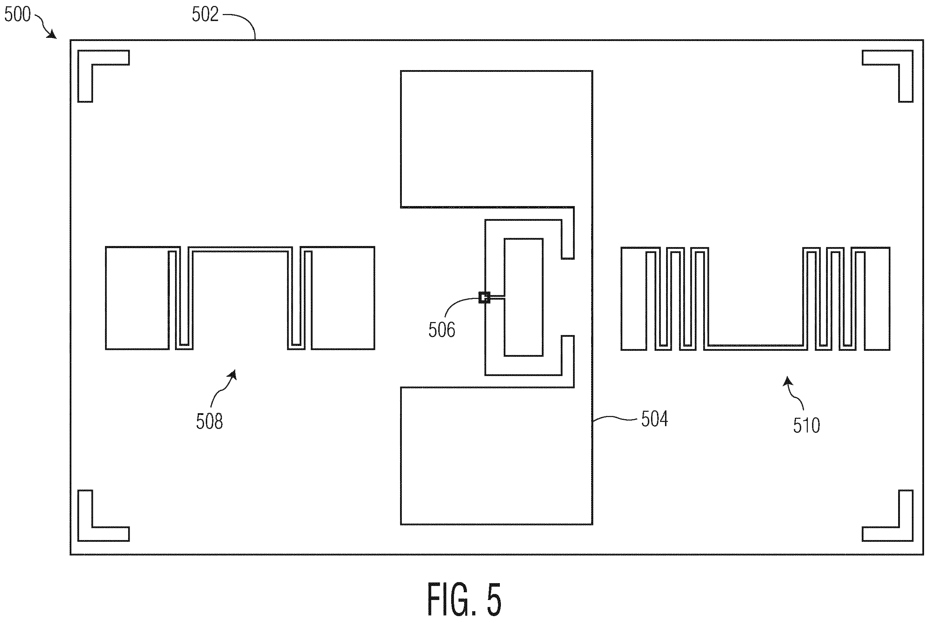

Fig. 5 is a diagram of a further alternative example RFID tag 500. The RFID tag 500 has a substrate 502. An antenna 504 in the form of a dipole is attached to the substrate 502 in a central position. An RFID IC chip 506 is attached to and is electrically coupled to the antenna 504. A first passive reflector 508 in the form of a second dipole is attached to the substrate 502 on the left side of the antenna 504 and oriented orthogonal to the antenna 504. A second passive reflector 510 in the form of a third dipole is attached to the substrate 502 on the right side of the antenna 504 and oriented orthogonal to the antenna 504. As shown, the relative dimensions of the capacitive pads and inductive loops are different between the first passive reflector 508 and the second passive reflector 510 so that the second passive reflector has a second different resonant frequency. More or fewer passive reflectors may be formed on the substrate to provide more or fewer resonant frequencies to suit a particular use of the RFID tag 500.

The passive reflectors 508, 510 are configured as dipoles that are short in the middle. The middles are different and, in some embodiments, the passive reflectors 508, 510 have different lengths. In the illustrated example, the passive reflectors 508, 510 are oriented orthogonal to the antenna 504. The orthogonal orientation reduces the influence of the passive reflectors 508, 510 on the characteristics, e.g., impedance, radiation pattern, etc. of the antenna 504. The components may otherwise be the same or may be implemented as any of the variations mentioned above. The first passive reflector 508 is also inverted with respect to the second passive reflector 510. As dipoles this may not affect the characteristics of the first passive reflector 508 and the first passive reflector may have the same orientation as the second passive reflector or one or both may be inverted. The orientation of the first passive reflector 508 may be adapted to suit different form factors, space, efficiency, and manufacturing constraints.

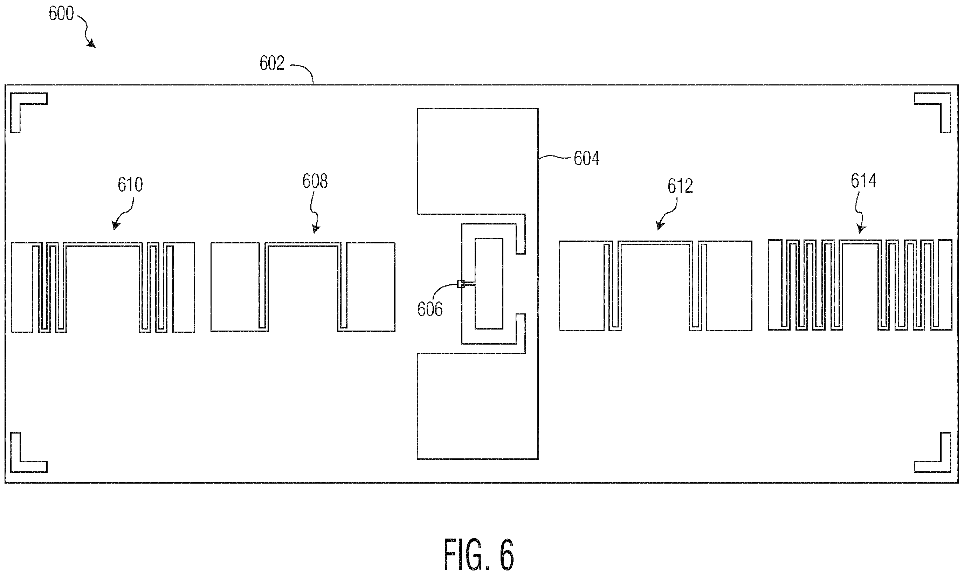

Fig. 6 is a diagram of a further alternative example RFID tag 600. The RFID tag 600 has a substrate 602. An antenna 604 in the form of a dipole is attached to the substrate 602 in a central position. An RFID IC chip 606 is attached to and is electrically coupled to the antenna 604. A first passive reflector 608 in the form of a second dipole is attached to the substrate 602 on the left side of the antenna 604 and oriented orthogonal to the antenna 604. A second passive reflector 610 in the form of a third dipole is attached to the substrate 602 on the left side of the first passive reflector 608 and also oriented orthogonal to the antenna 604. A third passive reflector 612 in the form of a fourth dipole is attached to the substrate 602 on the right side of the antenna 604 and also oriented orthogonal to the antenna 604. A fourth passive reflector 614 in the form of a fifth dipole is attached to the substrate 602 on the right side of the third passive reflector and also oriented orthogonal to the antenna 604. As shown, the relative dimensions of the capacitive pads and inductive loops are different between the different passive reflectors to provide different resonant frequencies. The substrate 602 may be made wider or narrower to accommodate different numbers of passive reflectors. The passive reflectors are all oriented in the same direction, but this is not required.

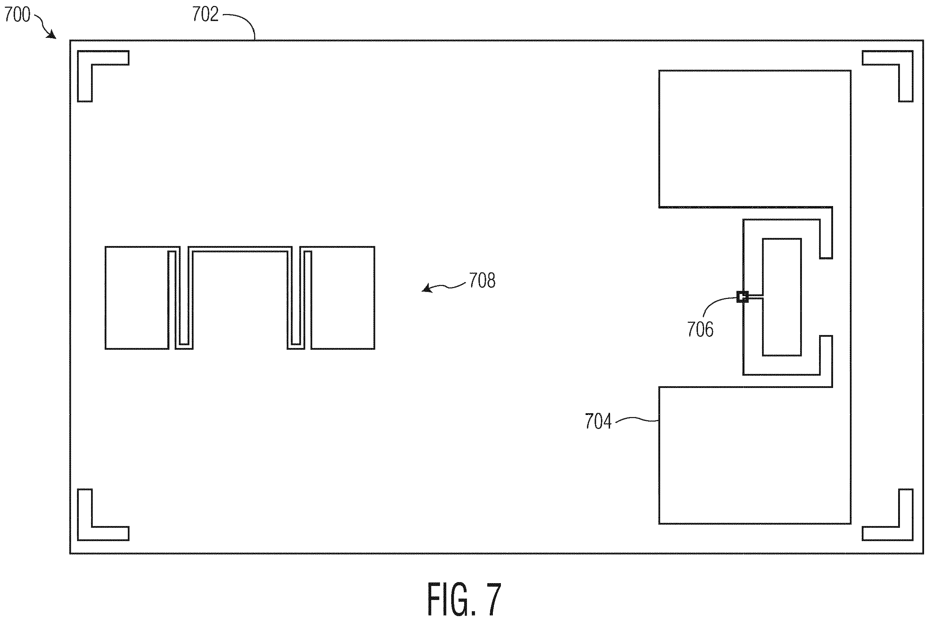

Fig. 7 is a diagram of a further alternative example RFID tag 700. The RFID tag 700 has a substrate 702. An antenna 704 in the form of a dipole is attached to the substrate 702 on one side of the substrate, shown as the right side. An RFID IC chip 706 is electrically coupled to the antenna 704. A passive reflector 708 in the form of a second dipole is attached to the substrate 702 on the opposite side of the substrate, shown as the left side. The passive reflector 708 is oriented orthogonal to the antenna 704. In this example the distancer between the passive reflector 708 and the antenna 704 is increased as compared to the examples above. While the passive reflector is shown as centered on the left side of the substrate 702 it may be closer to the top or to the bottom. The centers of the dipoles of the passive reflector 708 and antenna 704 do not need to be aligned in this or any of the other examples. Moving the centers apart may enhance the isolation between the passive reflector 708 and the antenna 704 in some circumstances. The components may otherwise be the same or may be implemented as any of the variations mentioned above.

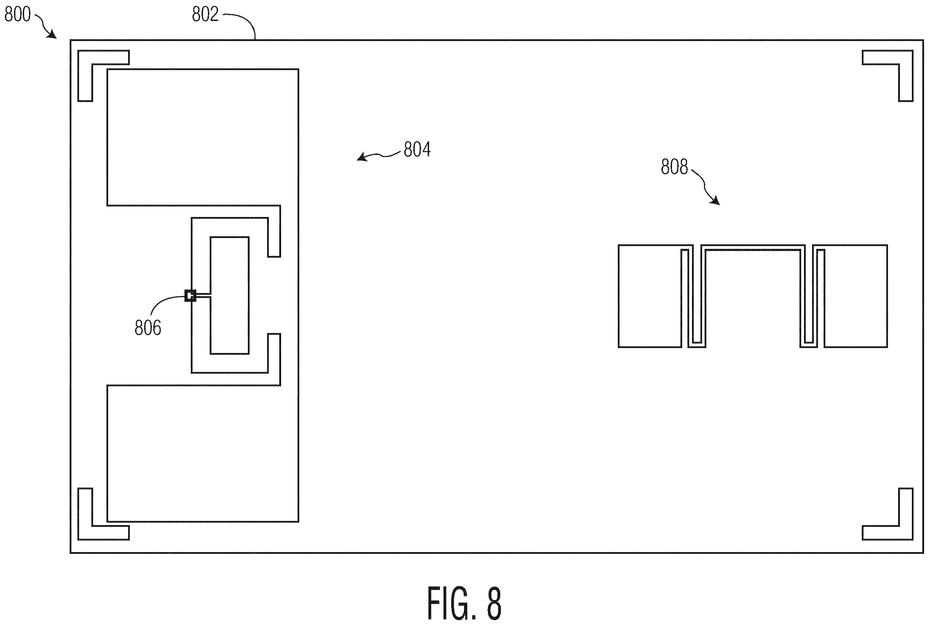

Fig. 8 is a diagram of a further alternative example RFID tag 800. The RFID tag 800 has a substrate 802. An antenna 804 in the form of a dipole is attached to the substrate 802 on one side of the substrate, shown as the left side. An RFID IC chip 806 is electrically coupled to the antenna 804. A passive reflector 808 in the form of a second dipole is attached to the substrate 802 on the opposite side of the substrate, shown as the right side. The passive reflector 808 is oriented orthogonal to the antenna 804. In this example the distancer between the passive reflector 808 and the antenna 804 is also increased as compared to the examples above. The passive reflector may be tuned as shown in any of the above examples.

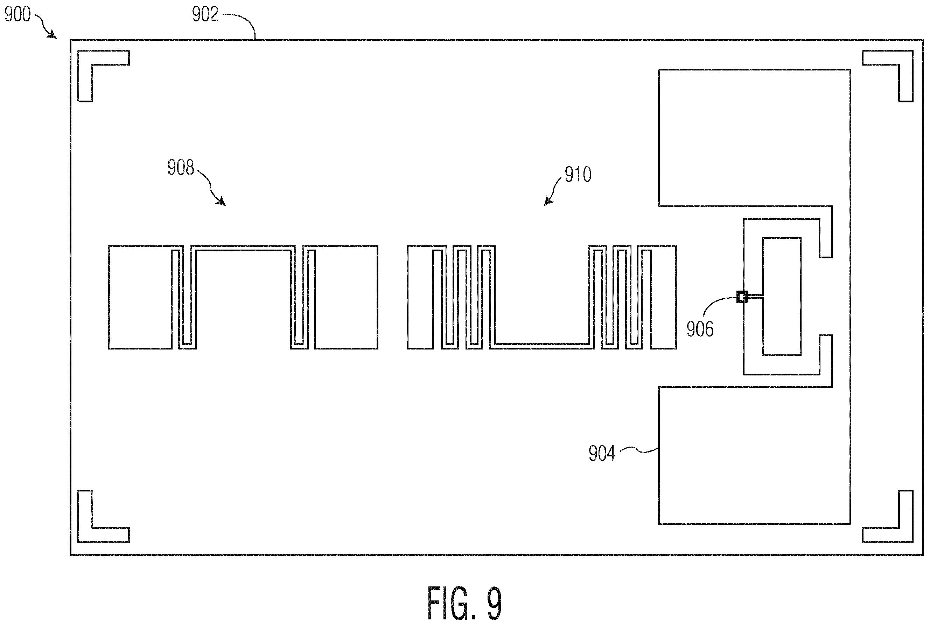

Fig. 9 is a diagram of a further alternative example RFID tag 900. The RFID tag 900 has a substrate 902. An antenna 904 in the form of a dipole is attached to the substrate 902 at the right side of the substrate 902. An RFID IC chip 906 is attached to the antenna 904. A first passive reflector 908 in the form of a second dipole is attached to the substrate 902 on the left side of the antenna 904 and oriented orthogonal to the antenna 904. A second passive reflector 910 in the form of a third dipole is attached to the substrate 902 between the first passive reflector 908 and the antenna 904 and also oriented orthogonal to the antenna 904. As shown, the relative dimensions of the capacitive pads and inductive loops are different between the first passive reflector 908 and the second passive reflector 910 so that the second passive reflector 910 has a second different resonant frequency. More or fewer passive reflectors may be formed on the substrate to provide more or fewer resonant frequencies to suit a particular use of the RFID tag 900.

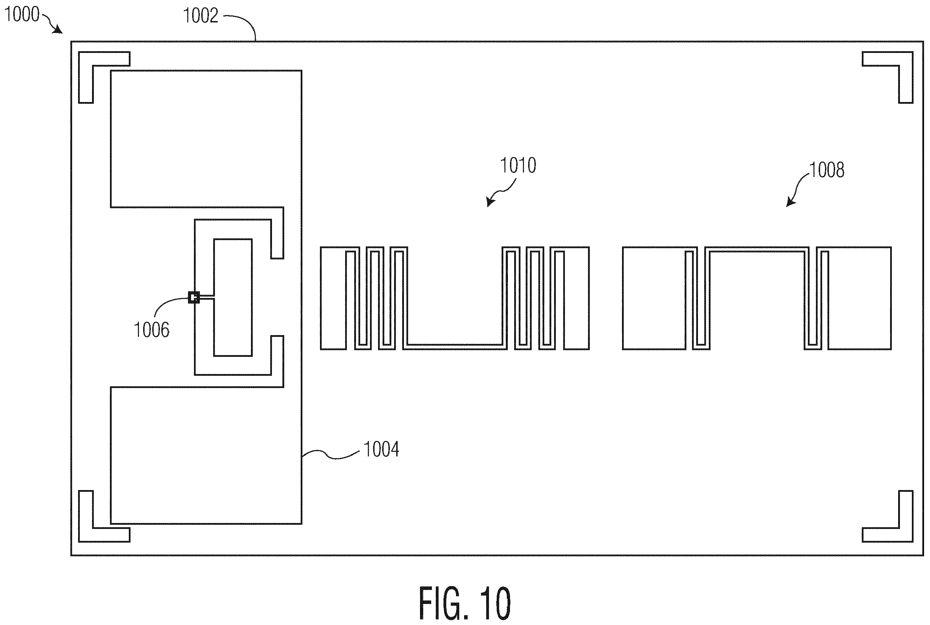

Fig. 10 is a diagram of a further alternative example RFID tag 1000. The RFID tag 1000 has a substrate 1002. An antenna 1004 in the form of a dipole is attached to the substrate 1002 at the left side of the substrate 1002. An RFID IC chip 1006 is attached to the antenna 1004. A first passive reflector 1008 in the form of a second dipole is attached to the substrate 1002 on the right side of the antenna 1004 and oriented orthogonal to the antenna 1004. A second passive reflector 1010 in the form of a third dipole is attached to the substrate 1002 between the first passive reflector 1008 and the antenna 1004 and also oriented orthogonal to the antenna 1004. As shown, the first passive reflector 1008 and the second passive reflector 1010 have different resonant frequencies. More or fewer passive reflectors may be formed on the substrate to provide more or fewer resonant frequencies to suit a particular use of the RFID tag 1000.

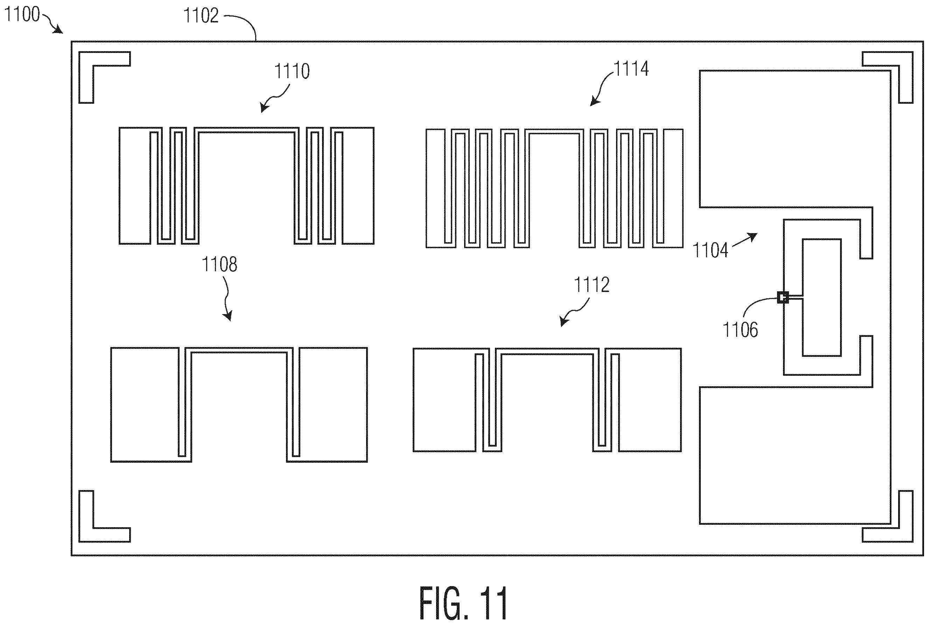

Fig. 11 is a diagram of a further alternative example RFID tag 1100. The RFID tag 1100 has a substrate 1102. An antenna 1104 in the form of a dipole is attached to the substrate 1102 in a right-side position. An RFID IC chip 1106 is attached to and is electrically coupled to the antenna 1104. A first passive reflector 1108 in the form of a second dipole is attached to the substrate 1102 on the left side of the antenna 1104 and oriented orthogonal to the antenna 1104. A second passive reflector 1110 in the form of a third dipole is attached to the substrate 1102 on the left side of the first passive reflector 1108 and also oriented orthogonal to the antenna 1104. The first passive reflector 1108 is vertically below the second passive reflector 1110 as shown in the diagram. A third passive reflector 1112 in the form of a fourth dipole is attached to the substrate 1102 between the first passive reflector 1108 and the antenna 1104 and also oriented orthogonal to the antenna 1104. A fourth passive reflector 1114 in the form of a fifth dipole is attached to the substrate 1102 between the second passive reflector 1110 and the antenna 1104 and also oriented orthogonal to the antenna 1104. The relative dimensions of the capacitive pads and inductive loops may be varied to be tuned to different resonant frequencies in the environment and different numbers of passive reflectors may be used. The passive reflectors are all oriented in the same direction, but this is not required.

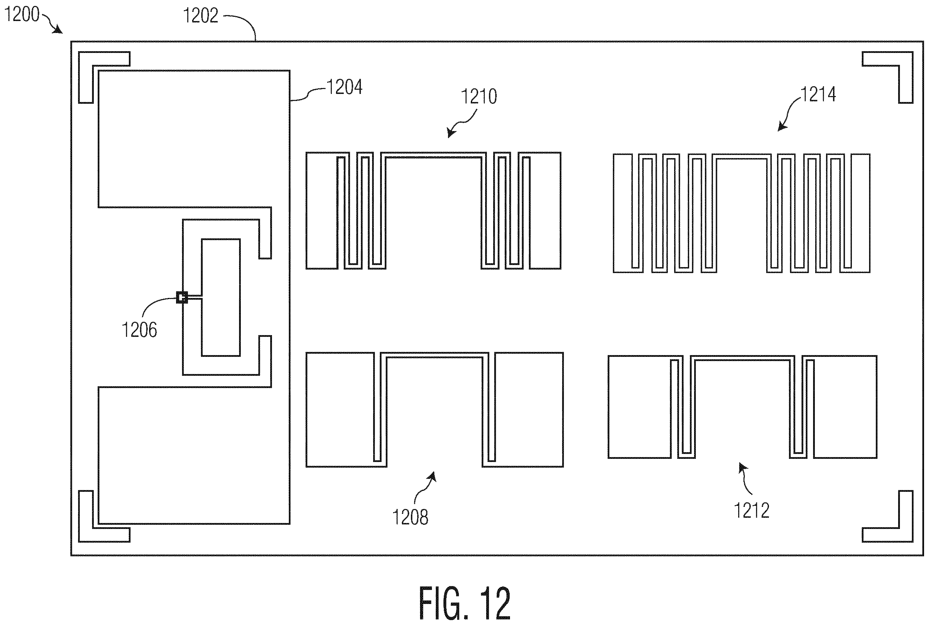

Fig. 12 is a diagram of a further alternative example RFID tag 1200. The RFID tag 1200 has a substrate 1202. An antenna 1204 in the form of a dipole is attached to the substrate 1202 in a left-side position. An RFID IC chip 1206 is attached to and is electrically coupled to the antenna 1204. A first passive reflector 1208 in the form of a second dipole is attached to the substrate 1202 on the right side of the antenna 1204 and oriented orthogonal to the antenna 1204. A second passive reflector 1210 in the form of a third dipole is attached to the substrate 1202 on the right side of the first passive reflector 1208 and also oriented orthogonal to the antenna 1204. A third passive reflector 1212 in the form of a fourth dipole is attached to the substrate 1202 on the right side of the first passive reflector 1208 and also oriented orthogonal to the antenna 1204. A fourth passive reflector 1214 in the form of a fifth dipole is attached to the substrate 1202 on the right side of the third passive reflector and also oriented orthogonal to the antenna 1204. The relative dimensions of the capacitive pads and inductive loops are different between the different passive reflectors to provide different resonant frequencies and may be different from those shown. The number and orientation of the passive reflectors may also be varied to suit different implementations.

In addition, in this and the other example diagrams, the passive reflectors may be moved up or down as shown in the drawings. As a further alternative, the antenna may be rotated so that the passive reflectors are above or below the antenna. The described structures provide a compact antenna structure with improved signal strength. Other nearby tags may be used to reflect additional energy to another antenna.

In the following description and claims, the term "coupled" along with its derivatives, may be used. "Coupled" is used to indicate that two or more elements have a connection that permits interaction but that there may be intervening physical or electrical components between them. "Electrically coupled" is used to indicate that the interaction is electrical as compared to physical, magnetic, or another form of interaction. As used in the claims, unless otherwise specified, the use of the ordinal adjectives "first," "second," "third," etc., to describe a common element, merely indicate that different instances of like elements are being referred to, and are not intended to imply that the elements so described must be in a given sequence, either temporally, spatially, in ranking, or in any other manner.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A radio frequency identification (RFID) tag comprising:
a dielectric substrate;
a first conductive pattern on the dielectric substrate to form an antenna;
an RFID integrated circuit (IC) chip on the dielectric substrate having an antenna port electrically coupled to the antenna, the antenna port being configured to provide RF energy from a reader to the RFID IC chip through the antenna, the RFID IC chip being configured to provide a response to the reader through the antenna; and
a second conductive pattern on the dielectric substrate beside the antenna in the form of a second dipole to form a passive reflector that is not electrically coupled to the antenna port, the passive reflector being configured to reflect RF energy from the reader away from the antenna.

2. The RFID tag of claim 1, wherein the antenna has a first orientation and the passive reflector has a second orientation orthogonal to the first orientation.

3. The RFID tag of claim 1 or 2, wherein the passive reflector has a plurality of inductive loops in the second conductive pattern and a capacitive pad in the second conductive pattern at each end of the inductive loops to provide a first resonant frequency, and wherein the RFID tag further comprises a second passive reflector on the dielectric substrate that is not coupled to the antenna port and that has a second different resonant frequency.

4. The RFID tag of claim 3, wherein the first conductive pattern and the second conductive pattern are formed by etching an aluminum layer on the dielectric substrate.

5. A radio frequency identification (RFID) tag comprising:
a substrate;
an antenna on the substrate;
an RFID integrated circuit (IC) chip on the substrate having an antenna port electrically coupled to the antenna, the antenna port being configured to provide RF energy from a reader to the RFID IC chip through the antenna, the RFID IC chip being configured to provide a response to the reader through the antenna; and
a passive reflector on the substrate that is not electrically coupled to the antenna port, the passive reflector being configured to reflect RF energy from the reader away from the antenna.

6. The RFID tag of claim 5, wherein the antenna has a first orientation and the passive reflector has a second orientation orthogonal to the first orientation.

7. The RFID tag of claim 5 or 6, wherein the passive reflector has a first resonant frequency, the RFID tag further comprising a second passive reflector on the substrate that is not coupled to the antenna port and that has a second different resonant frequency.

8. The RFID tag of anyone of claims 5 to 7, wherein the passive reflector is a dipole antenna.

9. The RFID tag of claim 8, wherein the dipole antenna comprises:
a first pole;
a second pole;
a first capacitive pad electrically coupled to the first pole; and
a second capacitive pad coupled to the second pole.

10. The RFID tag of claim 9, wherein the first and the second capacitive pads are at outboard ends of the respective first and second poles.

11. The RFID tag of claim 9 or 10, further comprising inductive loops at each end of the dipole antenna.

12. The RFID tag of any one of claims 5 to 11, wherein the passive reflector has a resonant frequency that corresponds with goods positioned nearby when the RFID tag is in use.

13. The RFID tag of any one of claims 5 to 12, wherein the antenna and the passive reflector are comprised of aluminum patterns on the substrate.

14. The RFID tag of claim 13, wherein the aluminum patterns are formed by etching an aluminum layer on the substrate.

15. The RFID tag of any one of claims 5 to 14, wherein the antenna comprises a loop antenna electrically coupled to a dipole antenna and wherein the loop antenna is coupled to the antenna port.
